Europäisches Patentamt

European Patent Office

Office européen des brevets

(19)

(11) Numéro de publication: **0 013 248**
**B1**

(12) **FASCICULE DE BREVET EUROPEEN**

(45) Date de publication du fascicule du brevet: **04.05.83**

(51) Int. Cl.³: **H 04 B 1/56**

(21) Numéro de dépôt: **79401077.7**

(22) Date de dépôt: **28.12.79**

(54) **Dispositif de télécommunications hyperfréquence.**

(30) Priorité: **29.12.78 FR 7836854**

(43) Date de publication de la demande:
**09.07.80 Bulletin 80/14**

(45) Mention de la délivrance du brevet:
**04.05.83 Bulletin 83/18**

(84) Etats contractants désignés:
**BE CH DE GB IT NL SE**

(56) Documents cités:
**FR - A - 2 165 740**

(73) Titulaire: **Pottier, Bernard**
**"Les Tilleuls" Saint-Georges-de-Luzençon**
**F-12100 Millau (FR)**

(72) Inventeur: **Pottier, Bernard**
**"Les Tilleuls" Saint-Georges-de-Luzençon**
**F-12100 Millau (FR)**

(74) Mandataire: **Laget, Jean-Loup**
**Cabinet Pierre Loyer 18, Rue de Mogador**
**F-75009 Paris (FR)**

Courier Press, Leamington Spa, England.

### Dispositif de télécommunications hyperfréquence.

L'invention concerne un dispositif de télécommunications hyperfréquence travaillant selon le mode duplex.

Le problème des télécommunications par voie hertzienne se heurte actuellement à l'encombrement des fréquences. Le recours aux hyperfréquences HF (supérieures à 10 GHz) permet de placer un grand nombre de systèmes de télécommunications dans un espace géographique restreint grâce à l'utilisation d'antennes très directives. Il permet également, à bandes passantes égales, de placer un plus grand nombre de systèmes dans une gamme de fréquences, ou d'utiliser des systèmes à grande bande passante.

La propagation étant pratiquement optique, on peut utiliser des antennes très directives dont les dimensions à ces fréquences sont petites. Le grand gain des antennes directives permet de n'utiliser que des puissances HF très faibles. On limite ainsi considérablement l'encombrement de l'éther. Enfin, ces fréquences très élevées permettent l'utilisation de spectres de modula-tions larges (téléphonie, multiplex, transmis-sion de données, transmission vidéo, etc . . .)

Un tel dispositif de télécommunication hyperfréquence duplex permettrait de relier à un réseau téléphonique existant des abonnés pour lesquels il est impossible ou trop coûteux de poser une ligne téléphonique. Ce dispositif permettrait également de relier entre eux, deux points fixes, en vue directe, pour permettre la transmission d'informations de tous types que ne pourrait véhiculer une ligne téléphonique standard.

Ce genre de dispositif présente l'inconvénient de comporter à chaque extrémité un émetteur, un récepteur et deux antennes. Il utilise deux fréquences porteuses pour réaliser le duplex, avec les protections nécessaires pour filtrer ces fréquences l'une par rapport à l'autre.

Cet inconvénient est évité, selon le brevet FR—A—2.165.740 qui decrit un dispositif de télécommunication hyperfréquence, travaillant selon le mode duplex et comportant pour chaque poste un oscillateur hyperfréquence délivrant une porteuse à une antenne et un oscillateur de découpage délivrant un signal de découpage de la porteuse, dans lequel l'oscillateur de découpage de chaque poste délivre un signal de fréquence déterminée et est modulé en fréquence par l'information à transmettre de sorte que le signal de découpage de la porteuse est utilisé comme sous-porteuse de l'information à transmettre, dans lequel chaque poste comporte un filtre sélectif accordé sur la fréquence du signal de découpage de l'autre poste et un détecteur de modulation de fréquence susceptible de restituer l'information transmise, et dans lequel chaque poste fonctionne en superréaction et assure à la fois l'émission et la réception avec le même antenne.

Ce dispositif est cependant limité à la communication entre deux postes.

La présente invention a pour but d'assurer la réalisation d'un dispositif de télécommunications hyperfréquence entre un poste et plusieurs autres postes d'un réseau.

Elle pour objet un dispositif de télécom-munication hyperfréquence du type précé-dent, caractérisé en ce que pour les communications d'un poste avec plusieurs autres, ledit poste comprend un présélecteur accordable sur la fréquence de découpage propre aux divers postes du réseau, un mélangeur, un oscillateur hétérodyne à fréquence réglable de sorte que la fréquence de battement dans le mélangeur entre cette fréquence et la fréquence de découpage de l'autre poste en service soit constante pour tous lesdits autres postes, un oscillateur de découpage accordable sur plusieurs fréquences correspondant aux divers autres postes, et un dispositif mécanique de commutation assurant simultanément le réglage des fréquences de l'oscillateur de découpage, du présélecteur et de l'oscillateur hétérodyne.

Selon une autre caractéristique de l'invention, pour la restitution de signaux télé-phoniques conventionnels, le dispositif com-prend un oscillateur de découpage commandé par tension et accordé, à l'étant de veille, sur une fréquence voisine de sa fréquence de découpage, et un démodulateur à boucle de verrouillage en phase couplé à un circuit de détection de son état de verrouillage en phase, de sorte que, lorsqu'un poste passe à l'état de trafic, son oscillateur de découpage se cale sur sa fréquence de découpage, et que le démodulateur de l'autre poste soit alors verrouillé en phase, le circuit de détection de son état de verrouillage en phase délivrant alors un signal conventionnel.

Selon une autre caractéristique de l'invention, pour les communications simultanées entre un poste et plusieurs autres, ledit poste comprend une pluralité de présélecteurs montés en série et couplés, chacun à un circuit comprenant un mélanger, un oscillateur hétérodyne, un filtre sélectif et un démodulateur.

Selon une autre caractéristique encore de l'invention, chaque poste du dispositif comprend un circuit de démodulation sélectif.

Les caractéristiques de l'invention ressortent de la description qui suit, faite avec référence au dessin annexé sur lequel on peut voir:

Figure 1, un schéma symbolique simplifié d'un dispositif de type connu à superréaction.

Figure 2, une représentation de la forme des signaux délivrés par le dispositif de la figure 1.

Figure 3, un schéma symbolique simplifié d'un exemple de réalisation d'un dispositif de télécommunications de type connu travaillant en duplex.

Figure 4, un schéma symbolique simplifié d'un exemple de réalisation d'un dispositif de télécommunications selon l'invention utilisant pour la réception un oscillateur hétérodyne.

Figure 5, un schéma symbolique simplifié d'un mode de réalisation d'un poste d'un dispositif de télécommunications selon l'invention susceptible d'assurer la restitution de signaux téléphoniques conventionnels.

Figure 6, une représentation de la forme des signaux et un exemple du rapport de durée des impulsions HF.

La technique décrite ici, permet de simplifier considérablement le dispositif de télécommunications hyperfréquence duplex. Elle permet également de n'utiliser qu'une seule fréquence porteuse HF pour réaliser la liaison duplex dans les deux sens, et ce, sans altérer les possibilités de transmission des divers modes d'information. Elle est particulièrement adaptée aux dispositifs oscillateurs hyperfréquence solides (diodes GUNN, diodes impatt, diodes à avalanche, et surtout transistors bipolaires ou FET). Il résulte de ces considérations une diminution considérable du prix des appareils, une simplification des circuits, et par conséquent un accroissement de la fiabilité. Il en résulte également, surtout avec les transistors dont le rendement est plus élevé que celui des diodes, une diminution considérable de la consommation de courant qui permet une alimentation à partir de piles ou de petits accumulateurs rechargeables en particulier à partir de cellules solaires de faible surface.

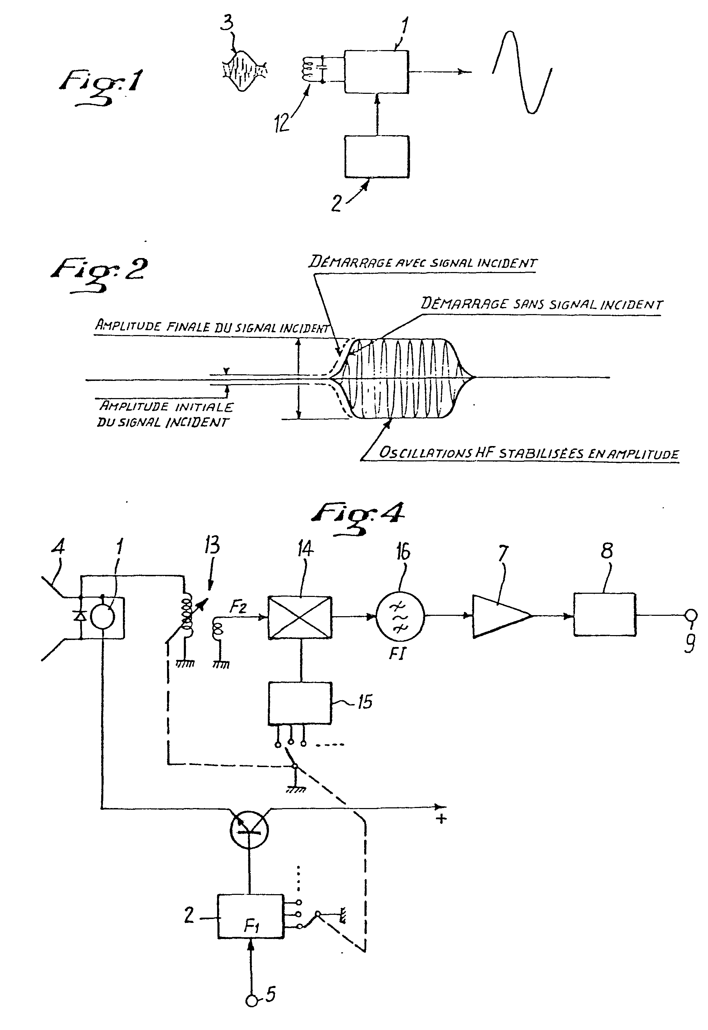

On utilise le procédé bien connu de la superréaction dont on rappelle brièvement le principe (figure 1):

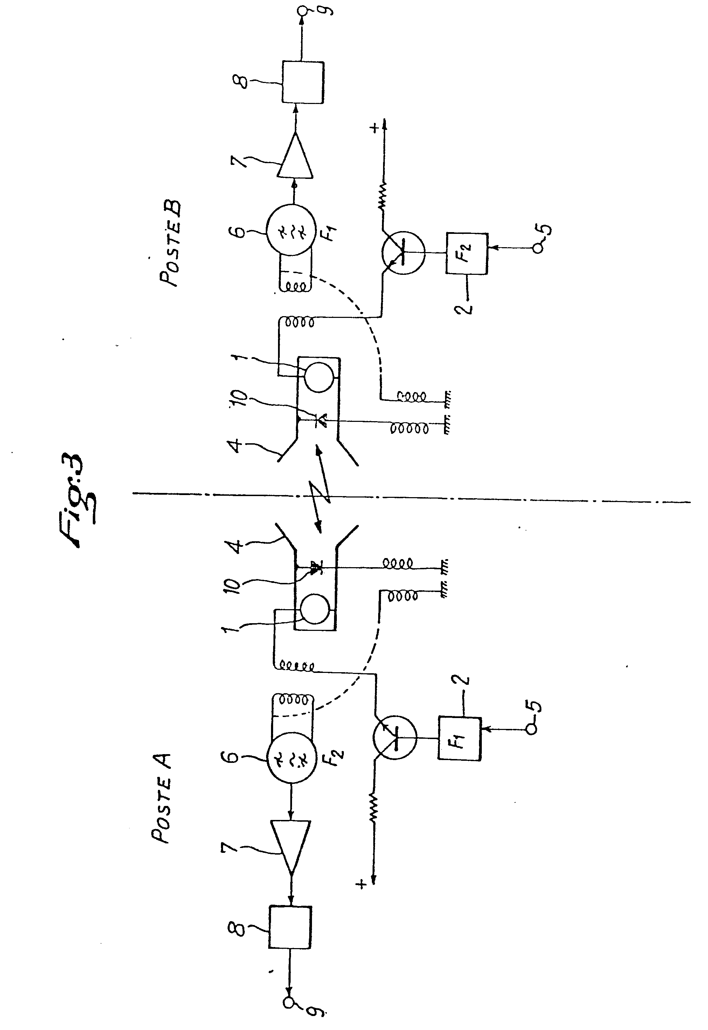

Un dispositif à superréaction comporte un oscillateur haute fréquence 1 dont les oscillations sont alternativement bloquées par un signal à fréquences plus basses dit signal de découpage produit par un oscillateur 2. Ce signal de découpage bloque et débloque l'oscillateur HF en modifiant sa polarisation. Partant de l'état bloqué lorsque la polarisation augmente il arrive un moment où les oscillations HF prennent naissance dans le circuit oscillant 12 de l'oscillateur 1. Si un signal HF perturbateur 3, de fréquence voisine de ou égale à celle de l'oscillateur HF, est introduit dans le circuit oscillant 12, il viendra modifier la polarisation de l'oscillateur HF 1 et créera un démarrage des oscillations HF en avance sur le démarrage produit par le signal de découpage. Cette avance sera d'autant plus grande que le signal perturbateur aura un niveau plus élevé. Si ce signal perturbateur est modulé en amplitude, l'avance de démarrage variera donc au rythme de la modulation d'amplitude du signal perturbateur. Il suffira de détecter les oscillations HF produites, donc leur avance de démarrage, pour restituer la courbe enveloppe de la modulation du signal perturbateur. Ce signal HF perturbateur peut être un signal HF que l'on désire recevoir. Il suffit donc de coupler une antenne au circuit oscillant de l'oscillateur 1 pour obtenir un récepteur de très grande sensibilité puisque le bruit de fond thermo-ionique seul suffit à moduler l'avance de démarrage des oscillations et à créer le bruit de "chute d'eau" caractéristique de la superréaction, bruit qui disparaît dès que l'on reçoit avec un niveau suffisant un signal cohérent. On notera également que la sensibilité en détection de ce dispositif n'est pas linéaire, mais logarithmique, ce qui assure une bonne régulation du signal reçu. La figure 2 donne la forme du signal HF en superréaction.

Le signal de découpage peut être, soit généré par l'oscillateur HF lui-même que l'on fait auto-osciller à fréquence basse, mais dans ce cas, la fréquence de découplage varie avec l'intensité du signal reçu, soit généré par un oscillateur à fréquence basse extérieur. Cette dernière solution permet d'avoir une fréquence de découpage très stable; elle permet également de découper un oscillateur qui oscille à fort niveau.

On voit donc qu'un dispositif à superréaction se comporte comme un détecteur très sensible, donc comme un récepteur, et comme un émetteur puisqu'il oscille. Il suffirait de le moduler en basse fréquence pour pouvoir émettre un signal utile un même temps que l'on peut recevoir un autre signal utile. Ce procédé a déjà été utilisé dans plusieurs appareils, mais présente de graves difficultés de séparation des deux voies du duplex, difficultés plus grandes encore à surmonter dans les dispositifs oscillateurs hyperféquence.

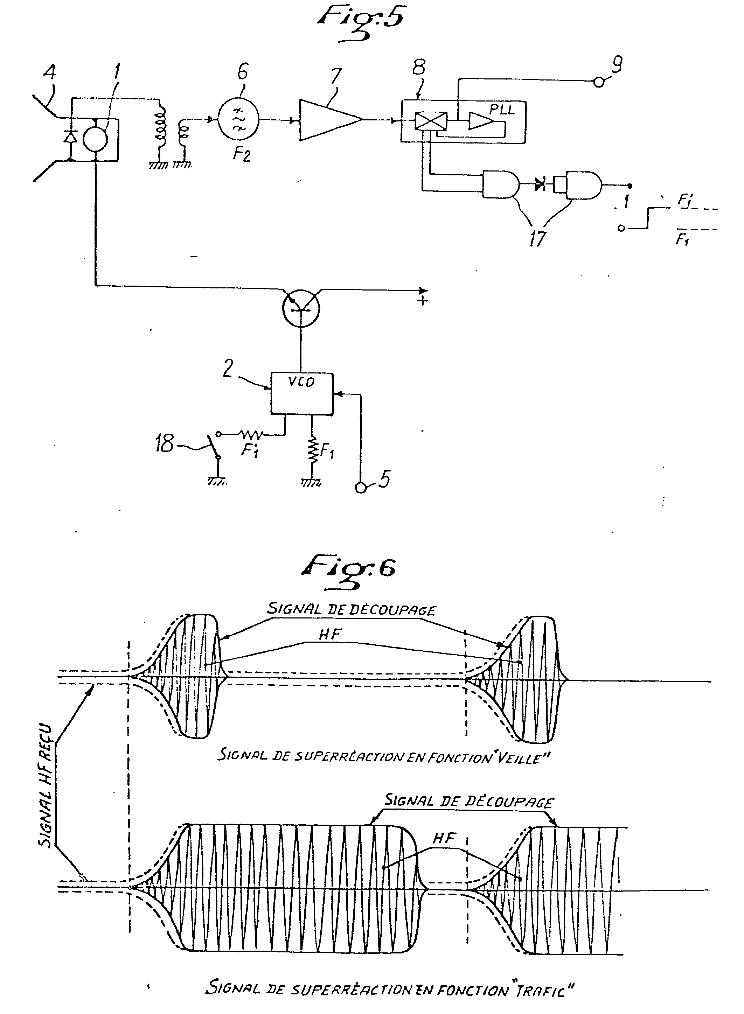

Selon le brevet français 2.165.740, on utilise le fréquence de découpage, et on la considère comme une sous-porteuse qui porte elle-même l'information à transmettre. Dans un tel cas, chacun des deux postes A et B, permettant une liaison duplex comporte donc (figure 3):

Une antenne 4 couplée à un oscillateur hyperfréquence 1 dont les oscillations sont découpées par un oscillateur de découpage 2. Cet oscillateur de découpage oscille à une fréquence $F_1$ dans le poste A et à une fréquence $F_2$ dans le poste B. Cet oscillateur de découpage 2 est modulé en fréquence par le signal à transmettre 5. Ensuite, l'oscillateur hyperfréquence 1 est suivi d'un filtre sélectif 6 accordé sur la fréquence $F_2$ dans le poste A et sur la fréquence $F_1$ dans le poste B. Ce filtre est suivi par un amplificateur limiteur 7 puis par un détecteur de modulation de fréquence 8 qui restitue le signal transmis 9.

On remarque donc que chaque dispositif à superréaction détecte la fréquence de découpage de celui qu'il reçoit. Seule la sélectivité des filtres 6 détermine la séparation des deux fréquences de découpage.

Il a été indiqué qu'un tel appareil travaillait en hyperfréquence. La valeur de la fréquence de découpage n'est donc pas critique. Elle sera choisie en fonction du signal à transmettre de quelques centaines de KHz, pour transmettre un signal téléphonique vocal, à quelques dizaines de MHz pour transmettre un signal vidéo, par exemple. Elle peut être générée par un auto-oscillateur ou par un dispositif piloté par quartz ou autre méthode stable.

Dans le dispositif à superréaction, la détection d'avance du démarrage des oscillations peut être effectuée par le dispositif oscillateur HF lui-même, puisqu'il se produit un régime non linéaire. Toutefois, dans certains cas et particulièrement en hyperfréquence, il est possible de coupler un détecteur séparé 10 au circuit oscillant, pour accroître la sensibilité en réception du dispositif. La figure 3 représente un tel circuit, la liaison en pointillé représentant une connexion électrique préférentielle dans ce cas.

Il est également possible d'utiliser non plus un oscillateur HF pour générer la superréaction, mais un amplificateur HF amplifiant le signal d'un oscillateur ou d'un multiplicateur piloté par un élément très stable. Dans ce cas, le signal perturbateur viendra modifier le niveau de déblocage de l'amplificateur HF, et par conséquent, la largeur des impulsions ou paquets d'impulsions de HF amplifiées. Le phénomène est identique à celui de la superréaction, et la détection de la HF amplifiée et découpée permet de restituer la courbe de modulation du signal perturbateur. Il est nécessaire alors d'utiliser un détecteur couplé au circuit oscillant de l'amplificateur HF, pour restituer ces signaux détectés, et la sensibilité d'un tel système est plus faible que celle d'un circuit de superréaction tel que décrit plus haut.

La génération du signal de découpage par l'oscillateur 2 peut être effectuée de toutes manières connues. Toutefois, un oscillateur du type VCO (Voltage controlled oscillateur ou oscillateur commandé par tension) utilisé en 2, si l'on ne recherche pas une stabilité élevée, permet d'obtenir très simplement l'adjustage de la fréquence de découpage et sa modulation de fréquence.

La démodulation de la fréquence de découpage 8 peut être effectuée de toutes les manières connues, mais là encore l'utilisation d'un système P.L.L. (Phase lock loop ou circuit à boucle de verrouillage en phase) en 8 permet d'obtenir un système de démodulation simple, fidèle, et donnant un très bon rapport signal/bruit lié à la méthode de comparaison de phase du circuit P.L.L.

L'invention apporte un certain nombre d'améliorations à cet état de la technique:

1° Il est possible de moduler le signal de découpage produit en 2 par un certain nombre de fréquences, elles-mêmes modulées en fréquence ou en amplitude par différents signaux à transmettre, et de réaliser ainsi un système à plusieurs voies.

2° Il est possible de moduler directement l'oscillateur HF 1 sur lequel est appliquée la superréaction par plusieurs fréquences, différentes de la fréquence de découpage, et de moduler ces fréquences par les signaux à transmettre et de réaliser ainsi un système à plusieurs voies.

3° Il est possible, afin de simplifier l'amplification et la démodulation de la sous-porteuse du poste opposé, et ce, particulièrement dans un réseau comportant plusieurs postes, de réaliser cette amplification et cette démodulation selon le procédé bien connu du changement de fréquence (ou superhétérodyne). L'utilisation de ce procédé permet d'accorder immédiatement un poste sur l'un ou l'autre des postes lui faisant face. On peut ainsi utiliser un certain nombre de canaux de sous-porteuses, avec une seule porteuse hyperfréquence, pour réaliser un réseau de télécommunication. La figure 4 donne l'exemple d'un poste ainsi réalisé. Il comporte:

Une antenne 4, un oscillateur hyperfréquence 1 découpé par le signal de l'oscillateur de découpage 2 qui peut être accordé sur plusieurs fréquences correspondant aux divers postes du réseau et qui est modulé par le signal utile 5. L'oscillateur HF 1 est suivi d'un présélecteur 13 qui peut être accordé sur la fréquence de découpage propre aux divers postes du réseau. Ce présélecteur 13 est suivi d'un mélanger 14 qui reçoit un signal héterodyne d'un oscillateur 15 dont la fréquence est réglée à chaque fois, telle que le battement de cette fréquence avec la fréquence de découpage du poste du réseau choisi soit constante pour tous les postes du réseau, et égale à une valeur FI. La fréquence de cet oscillateur 15 peut être commutée en commande unique avec le présélecteur 13 et l'oscillateur de découpage 2 de façon à réaliser une commutation simple de canaux. Le mélangeur 14 est suivi d'un filtre de bande 16 accordé sur la fréquence FI qui assure la sélectivité du système et la séparation des canaux. Ce filtre 16 est suivi d'un amplificateur limiteur 7 et d'un démodulateur 8 qui restitue le signal utile 9.

Toutes les variantes de ce procédé peuvent être utilisées.

4° Il est possible de réaliser un système permettant de restituer les signaux d'appel, de sonnerie et/ou de numérotation automatique, identique à ceux produits par les coupures de ligne sur les lignes des réseaux téléphoniques filaires.

Un tel système peut être réalisé simplement en utilisant des circuit VCO et PLL, déjà mentionnés, pour la génération 2 et la démodulation 8 des signaux de découpage. Un exemple est représenté figure 5 dans le cas d'une liaison duplex, en ne décrivant que l'un des postes, l'autre étant symétrique.

Le signal de découpage $F_1$ du poste A est maintenu, pendant la veille, à une valeur $F'_1$, voisine de $F_1$, mais telle qu'elle soit en dehors de la gamme de capture du PLL démodulateur 8 du poste B accordé sur $F_1$. De même, le signal de découpage $F_2$ du poste B est maintenu, pendant la veille à une fréquence $F'_2$ voisine de $F_2$, telle qu'elle soit en dehors de la gamme de capture du PLL démodulateur 8 du poste A accordé sur $F_2$.

A chaque démodulateur PLL est couplé un circuit 17 de detection de l'état de verrouillage en phase du circuit PLL. Ce circuit est à l'état logique 1 en l'absence de verrouillage, et à l'état logique 0 pendant le verrouillage. Si le poste A passe en trafic (par exemple combiné téléphonique décroché), le contact 18 fait passer le signal de découpage du poste A de la valeur $F'_1$ à la valeur $F_1$. A ce moment, le PLL 8 du poste B se verrouille. Le circuit 17 du poste B passe à l'état 0 et peut actionner, au poste B, une sonnerie, un système d'alerte, ou tout autre système. Si l'on décrouche le combiné du poste B, sa sonnerie peut être arrêtée, et le contact 18 fait passer le signal de découpage du poste B de la valeur $F'_2$ à la valeur $F_2$, et la liaison peut s'établir. Si le poste B n'est pas relié à un combiné, mais à une ligne téléphonique, ce peut être l'état 0 du circuit 18 du poste B qui fasse passer la fréquence de découpage du poste B de la valeur $F'_2$ à la valeur $F_2$. En sens inverse, si le poste B reçoit un appel sur ligne à transmettre au poste A, ce peut être le signal d'appel sur la ligne qui fasse passer le signal de découpage du poste B de la valeur $F'_2$ à la valeur $F_2$, indiquant au correspondant du poste A que son correspondant, situé à l'extrémité de la ligne raccordée au poste B, vient de l'appeler.

Il est possible de placer en série avec le contacteur de combiné du poste A un cadran de numérotation téléphonique qui fera passer la fréquence de découpage de la valeur $F'_1$, à la valeur $F_1$, au rythme des impulsions de numérotation. Au poste B, le circuit 18 passera successivement de l'état 1 à l'état 0, en fonction de ces impulsions, et un circuit amplificateur complémentaire suivant 18 permettra de restituer les courants de ligne sur la ligne téléphonique, et d'actionner ainsi le dispositif commutateur du central téléphonique automatique. Le processus est réversible du poste B vers le poste A.

Toute autre méthode que l'utilisation de circuits VIC et PLL peut être envisagée pour réaliser cette commutation (utilisation de la sélectivité du filtre 6, par exemple).

5° En complément du circuit décrit ci-dessus, il est possible d'utiliser un système de veille économisant le courant consommé par l'oscillateur HF, diminuant la puissance HF fournie à l'antenne, et par conséquent, diminuant les possibilités de brouillage.

En effet, la sensibilité de la superréaction est liée à la pente du signal de découpage, et dans une certaine mesure, à sa fréquence, mais ne dépend pas, ou peu, de la largeur de l'impulsion HF. Il suffit donc, dans le circuit de la figure 5, de modifier le rapport du cycle de la fréquence de découpage, selon que la valeur de cette fréquence de découpage soit $F'_1$ et $F'_2$ et $F_1$ et $F_2$. En $F'_1$ et $F'_2$, la durée des impulsions HF sera très courte, et juste nécessaire à l'obtention de la sensibilité de la superréaction. En $F_1$ et $F_2$, la durée des impulsions HF sera la plus grande possible pour obtenir le plus de puissance HF possible. La figure 6, donne un exemple du rapport de durée des impulsions HF.

6° Il est possible avec ce procédé de recevoir simultanément sur un poste A deux ou plusieurs postes B, C, etc. émettant sur la même fréquence hyperfréquence pourvu que les fréquences de découpage FdB, FdC, etc. des postes B, C, etc. soient différentes entre elles et que le poste A possède autant de présélecteurs montés en série et de systèmes de filtrage et de démodulation de fréquences de découpage FdB, FdC, etc. qu'il y a de postes B, C, etc.

En effet, l'émission de chaque poste B, C etc. étant découpée par la fréquence de découpage et la réception s'effectuant grâce à ce découpage, on peut considérer qu'il y a en quelque sorte un échantillonnage des signaux reçus. S'il n'y a donc pas un synchronisme absolu entre les fréquences de découpage FdA, FdB, FdC, etc. on peut considérer qu'il y a aléatoirement réception successive au poste A des postes B, C, etc. Dans le temps, cet échantillonnage des réceptions est intégré et donne à la sortie de chaque voie dans le poste A une réception continue du signal utile des postes B, C, etc. Il conviendra cependant de choisir les valeurs des différentes fréquences de découpage de telle manière qu'il y ait le moins de risque d'interférence possible.

7° Il est possible, pour créer le signal de découpage à fréquence stable, d'utiliser l'oscillateur hyperfréquence lui-même, en remplaçant le dispositif d'auto-oscillation, généralement constitué d'un ensemble résistance-condensateur par un dispositif à inductance-condensateur, dont la fréquence de résonance ne dépend plus que de la valeur de ces deux éléments. Dans ce cas, la modulation en fréquence du signal de découpage peut se faire par application du signal de modulation sur une diode à capacité variable mise en parallèle sur le condensateur de l'ensemble inductance-condensateur.

Ce dispositif a l'avantage, outre la stabilité, de créer un découpage sinusoïdal et de diminuer le spectre de fréquence rayonné par l'oscillateur hyperfréquence en état de superréaction et de simplifier la réalisation de l'appareil par suppression des circuit créant séparément l'oscillation de découpage.

Dune façon générale, on peut également remplacer pour chaque poste l'ensemble du circuit comprenant le filtre sélectif et le démodulateur, et le cas échéant, le mélangeur et l'oscillateur hétérodyne, par un dispositif de démodulation sélectif tel que par exemple un dispositif de démodulation synchrone à boucle de verrouillage de phase.

L'invention décrite ci-dessus et ses améliorations ont été prévues pour être utilisées particulièrement dans la gamme des hyperfréquences. Toutefois, cette gamme de fréquences n'est pas limitative, et l'invention peut s'appliquer partout où l'on utilise le procédé bien connu de la superréaction, que le découpage soit généré par un oscillateur séparé, ou autogénéré par l'oscillateur HF lui-même.

Les différents perfectionnements indiqués ci-dessus peuvent être utilisés conjointement ou séparément.

## Revendications

1. Dispositif de télécommunications hyperfréquence, travaillant selon le mode duplex, du type comportant pour chaque poste (A, B) un oscillateur hyperfréquence (1) délivrant une porteuse à une antenne (4) et un oscillateur de découpage (2) délivrant un signal de découpage de la porteuse, dans lequel l'oscillateur de découpage (2) de chaque poste délivre un signal de fréquence déterminée $(F_1, F_2)$ et est modulé en fréquencé par l'information à transmettre de sorte que le signal de découpage de la porteuse est utilisé comme sous-porteuse de l'information à transmettre; dans lequel chaque poste (A, B) comporte un filtre sélectif accordé sur la fréquence du signal de découpage de l'autre poste et un détecteur (8) de modulation de fréquence susceptible de restituer l'information transmise, et dans lequel chaque poste fonctionne en superréaction, et assure à la fois l'émission et la réception avec la même antenne (4), caractérisé en ce que pour les communications d'un poste avec plusieurs autres, ledit poste comprend un préselecteur (13) accordable sur la fréquence de découpage propre aux divers postes du réseau, un mélangeur (14), un oscillateur hétérodyne (15) à fréquence réglable de sorte que la fréquence de battement dans le mélangeur (14) entre cette fréquence et la fréquence de découpage de l'autre poste en service soit constante pour tous lesdits autres postes, un oscillateur de découpage (2) accordable sur plusieurs fréquences correspondant aux divers autres postes, et un dispositif mécanique de commutation assurant simultanément le réglable des fréquences de l'oscillateur de découpage (2), du présélecteur (13) et de l'oscillateur hétérodyne (15).

2. Dispositif selon la revendication 1, caractérisé en ce que pour la restitution de signaux téléphoniques conventionnels, il comprend un oscillateur de découpage (2) commandé par tension et accordé, à l'état de veille, sur une fréquence $(F'_1)$ voisine de sa fréquence de découpage $(F_1)$, et un démodulateur (8) à boucle de verrouillage en phase couplé à un circuit (17) de détection de son état de verrouillage en phase, de sorte que, lorsqu'un poste passe à l'état de trafic, son oscillateur de découpage (2) le cale sur sa fréquence de découpage, et que le démodulateur (8) de l'autre poste soit alors verrouillé en phase, le circuit (17) de détection de son état de verrouillage en phase délivrant alors un signal conventionnel.

3. Dispositif selon l'une des revendications 1 ou 2, caractérisé en ce que pour les communications simultanées entre un poste (A) et plusieurs autres (B,C) ledit poste (A) comprend une pluralité de présélecteurs (13) montés en série et couplés chacun à un circuit comprenant un mélangeur (14), un oscillateur hétérodyne (15), un filtre sélectif (6) et un démodulateur (8).

4. Dispositif selon l'un des revendications 1 à 3, caractérisé en ce que chaque poste comprend un circuit (8) de démodulation sélectif.

## Patentansprüche

1. Hyperfrequenzfernmeldevorrichtung mit Duplexbetrieb, die für jede Station (A, B) einen eine Trägerwelle an eine Antenne (4) liefernden Hyperfrequenzoszillator (1) und einen ein Zerhacksignal für die Trägerwelle liefernden Zerhackoszillator (2) aufweist, bei der der Zerhackoszillator (2) jeder Station ein Signal einer bestimmten Frequenz $(F_1, F_2)$ liefert und durch die zu übertragende Information frequenzmoduliert ist, derart, daß das Zerhacksignal der Trägerwelle als Hilfsträgerwelle der zu übertragenden Information verwendet wird, bei der desweiteren jede Station (A, B) ein auf die Frequenz des Zerhacksignals der anderen Station abgestimmtes selektives Filter und einen das übertragene Signal wiederherstellenden Frequenzmodulationsdetektor (8) aufweist und bei der jede Station mit Überrückkopplung arbeitet und das gleichzeitige Senden und Empfangen mit derselben Antenne (4) ermöglicht, dadurch gekennzeichnet, daß zur Nachrichtenübermittlung zwischen einer und mehreren anderen Stationen, die genannte Station folgendes aufweist; Einen auf die den verschiedenen Stationen des Netzes zueigenen Zerhackfrequenzen abstimmbaren Vorwähler (13), einen Mischer (14), einen Überlagerungsoszillator (15), dessen Frequenz einstellbar ist, so daß die Schwebungsfrequenz in dem Mischer (14) zwischen dieser Frequenz und der Zerhackfrequenz der anderen in Betrieb befindlichen Station für alle die anderen Stationen konstant ist, einen auf mehrere, den verschiedenen anderen Stationen entsprechende Frequenzen abstimmbaren Zerhackoszillator und eine mechanische Umschalteinrichtung, die gleichzeitig die Einstellung der Frequenzen der Zerhackoszillators (2) des Vorwählers (13) und des Überlagerungsoszillators (15) ermöglicht.

2. Vorrichtung nach Anspruch 1, dadurch gekennzeichnet, daß sie zur Wiederherstellung konventioneller Telefonsignale einen spannungsgesteuerten Zerhackoszillator (2), der im Bereitschaftszustand auf eine seiner Zerhackfrequenz $(F_1)$ benachbarte Frequenz $(F'_1)$ abgestimmt ist, und einen Demodulator (8) mit Phasenverriegelungsschleife aufweist, der an eine Schaltung (17) zum Nachweis seines Phasenverriegelungszustand gekoppelt ist, so daß stets dann, wenn eine Station in den Betriebszustand übergeht, ihr Zerhackoszillator (2) sich auf ihrer Zerhackfrequenz verriegelt und der Demodulator (8) der anderen Station phasenverriegelt wird, wobei die Schaltung (17) zum Nachweis des Phasenverriegelungszustandes dann ein konventionelles Signal liefert.

3. Vorrichtung nach Anspruch 1 oder 2, dadurch gekennzeichnet, daß zur gleichzeitigen Nachrichtenübermittlung zwischen einer Station (A) und mehreren anderen Stationen (B, C) die genannte Station (A) folgendes aufweist: Eine Vielzahl von in Reihe geschalteten Vorwählern (13), die jeweils an einen einen Mischer (14) enthaltenden Schaltkreis gekoppelt sind, eine Uberlagerungsoszillator (15), ein selektives Filter (6) und einen Demodulator (8).

4. Vorrichtung nach einem der Ansprüche 1 bis 3, dadurch gekennzeichnet, daß jede Station eine selektive Demodulationsschaltung (8) aufweist.

## Claims

1. Microwave telecommunications apparatus, working in the duplex mode, of the type comprising for each station (A, B) a microwave oscillator (1) providing a carrier to an aerial (4) and a keying oscillator (2) providing a carrier blocking signal, in which the keying oscillator (2) of each station issues a signal of defined frequency $(F_1, F_2)$ and is frequency modulated by the information to be transmitted so that the carrier blocking signal is used as a sub-carrier of the information to be transmitted in which each station (A, B) includes a selective filter tuned to the frequency of the other station's blocking signal and a frequency modulation detector (8) capable of recovering the information transmitted, and in which each station operates in a superregenerative mode, and provides transmission and reception at one and the same time with the same aerial (4), characterised in that for communications from one station to several others, the said station comprises a preselector (13) which can be tuned to the particular blocking frequencies of the various stations of the network, a mixture (14), a heterodyne oscillator (15) of adjustable frequency so that the beat frequency in the mixer (14) between this frequency and the blocking frequency of the other station in use stays constant for all the said other stations, a keying oscillator (2) tunable to several frequencies corresponding to the various other stations, and a mechanical switching device providing simultaneously the adjustments of the frequencies of the keying oscillator (2), of the preselector (13) and of the heterodyne oscillator (15).

2. Apparatus according to claim 1, characterised in that for the restoration of conventional telephonic signals, it comprises a keying oscillator (2) which is voltage controlled and tuned, in the standby state, to a frequency $(F'_1)$ close to its blocking frequency $(F_1)$, and a phase-locked loop demodulator (8) coupled to a circuit (17) for detecting its state of phase lock, so that, when a station changes to the busy state, its keying oscillator (12) adjusts itself to its blocking frequency, and that the demodulator (8) of the other station is then phase-locked, the circuit (17) for detecting its state of phase lock then issuing a conventional signal.

3. Apparatus according to either of claims 1 or 2, characterised in that for the simultaneous communications between a station (A) and several others (B, C) the said station (A) comprises a plurality of preselectors (13) assembled in series and each coupled to a circuit comprising a mixer (14), a heterodyne oscillator (15), a selective filter (6) and a demodulator (8).

4. Apparatus according to one of claims 1 to 3, characterised in that each station includes a selective demodulation circuit (8).

*Fig. 1*

*Fig. 2*

DÉMARRAGE AVEC SIGNAL INCIDENT

DÉMARRAGE SANS SIGNAL INCIDENT

AMPLITUDE FINALE DU SIGNAL INCIDENT

AMPLITUDE INITIALE
DU SIGNAL INCIDENT

OSCILLATIONS HF STABILISÉES EN AMPLITUDE

*Fig. 4*

$F_2$

$F_1$

*Fig.3*

POSTE A

POSTE B

8  7  6  1  10  4   4  10  1  6  7  8

$F_2$   $F_1$

$F_1$  2   2  $F_2$

5   5

0013248

0013248

*Fig:5*

*Fig:6*

SIGNAL DE DÉCOUPAGE

HF

SIGNAL HF REÇU

SIGNAL DE SUPERRÉACTION EN FONCTION "VEILLE"

SIGNAL DE DÉCOUPAGE

HF

SIGNAL DE SUPERRÉACTION EN FONCTION "TRAFIC"

3